# EUROPEAN PATENT SPECIFICATION

(11) **EP 2 923 133 B1**
(45) Date of publication and mention of the grant of the patent: **17.08.2016**
(21) Application number: 12854549.8
(22) Date of filing: 21.11.2012
(51) Int. Cl.: F16L 37/32

(54) **COMPACT PUSH-PULL FEMALE QUICK COUPLING**
KOMPAKTE SCHNELLKUPPLUNGSBUCHSE
RACCORD RAPIDE FEMELLE COMPACT DU TYPE POUSSER-TIRER

(43) Date of publication of application: 30.09.2015
(73) Proprietor: Faster S.p.A., 20124 Milan (IT)
(72) Inventor: CANZI, Luigi, I-20066 Melzo (IT); SORBI, Roberto, I-26027 Rivolta d'Adda (IT); RUSCONI, Paolo, I-26027 Rivolta d'Adda (IT)
(74) Representative: Lualdi, Lorenzo
(86) International application number: PCT/IB2012/056587
(87) International publication number: WO 2014/080242

(56) References cited:
- GB-A- 2 250 073
- US-A- 2 678 834
- US-A- 3 113 588

## Description

### Description of the Invention

The present invention relates to a compact push-pull quick coupling, that is suitable for being connected to a corresponding male coupling by means of an axial push-pull movement.

### State of the art

As is known in the prior art, quick coupling comprise a male coupling and a female coupling, and in general each of said male and female fittings internally comprises numerous components, including the valve bodies necessary for the closure of the fitting when said fitting is uncoupled and pressurised fluid is present within it. Such a quick coupling is e.g. shown in document US 3 113 588. The presence of a valve body suitable for closing the flow of the fluid is also very important in that it allows the connection and disconnection of the fitting even when there is pressurised fluid in one of the two fittings.

In particular, the present invention concerns a female quick coupling comprising within it a valve body and a locking device of said valve body of the female fitting, suitable for firmly maintaining the valve body in an open position.

As is known in the prior art, when the female fitting and the male fitting are coupled to each other and the valve body of the female fitting is maintained in an open position, the valve body of the male fitting is also maintained in an open position. The return flow in the case of high flow rates is thus prevented.

The type of fitting being discussed has been known on the market for several years, and is used in the agricultural sector in particular. The fittings currently known from the prior art and present on the market present as drawback the fact that they have dimensions that are not contained and a high structural complexity on account of the high number of inner components, in particular those components producing the, generally hydraulic, valve body locking system.

As mentioned, the couplings of the type being discussed, equipped with a valve body locking system and known in the prior art present a, generally hydraulic, valve body locking system. The aim of the present invention is therefore that of providing a female coupling equipped with a mechanical locking device that is extremely compact and produced with a contained number of elements, so as to also result, in addition to having minimum dimensions, more reliable with respect to the solutions known in the prior art.

### Summary of the invention

The main aim of this invention is thus that of resolving the drawbacks set out thus far and other drawbacks that afflict fittings with valve locking systems of the type known from the prior art.

In particular, within said main aim, the object of the present invention is that of providing a compact female coupling of the push-pull type equipped with a mechanical locking device of the valves that is particularly simple from a structural point of view and, consequently, reliable and having reduced dimensions.

This aim and these and other objects, which will become clearer from the remainder of the document, are achieved by a compact female coupling of the push-pull type equipped with mechanical locking of the valve unit, as claimed in the accompanying claims.

### Brief description of the drawings

Further characteristics and advantages of the present invention shall become clearer from the following detailed description, provided by way of a non-limiting example and illustrated in the accompanying drawings, wherein:
figure 1 shows a perspective view in partial cross section of the female quick coupling according to the present invention;
figure 1A shows a detail, the forked cam, of the mechanical locking device characterising the female quick coupling according to the present invention;
figure 1B shows a detail, the valve guide, of the mechanical locking device characterising the female quick coupling according to the present invention;
figure 2 shows a detail of the mechanical locking device, with assembled forked cam and valve guide, of the valve unit of the coupling according to the present invention;
figure 2A shows a detail of the inner body of the quick coupling according to the present invention;

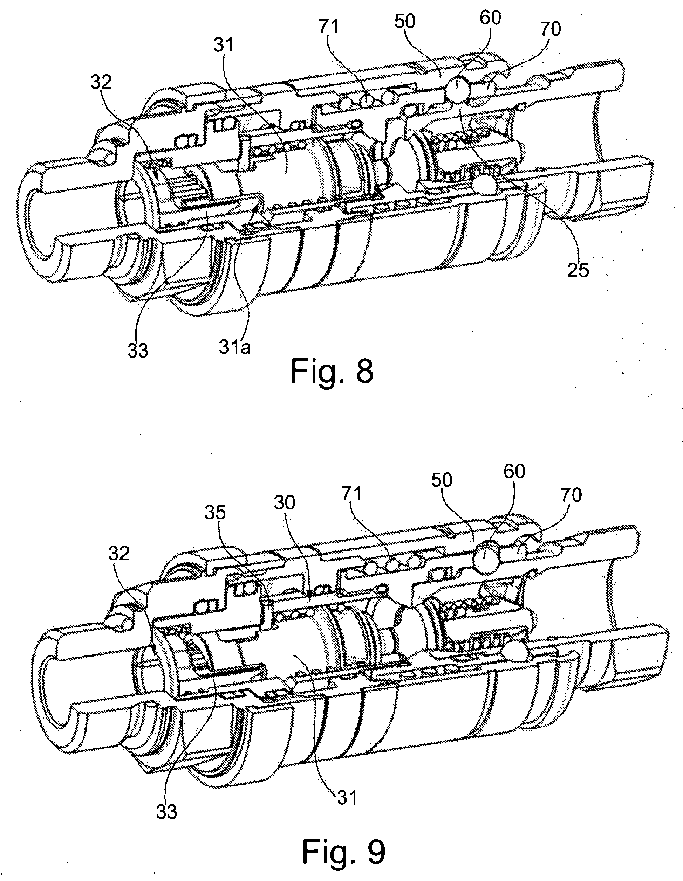

figures 3 to 12 again show in a perspective view in partial cross section various stages of the insertion of a male coupling into the female coupling according to the present invention and some details, as will be better explained below;
figure 13 shows a detail of the inner body and the valve guide with the compression-torsions spring.

### Detailed description of the invention

According to a preferred embodiment of the present invention illustrated in the aforementioned drawings by way of a non-limiting example, the female coupling **10** has a substantially cylindrical shape and comprises within it a plurality of components also having cylindrical symmetry. In particular, in axial position and axially moveable, said female coupling **10** comprises a valve body **11,** having a substantially cylindrical form and presenting an end valve **12** adapted to coming into contact with the end valve **22** of a valve body **21** envisaged in the male coupling **20.**

As mentioned, the female coupling **10** according to the present invention is a mechanical locking device **30** of the valve body **11.**

Said mechanical locking device **30** comprises, a valve guide **31,** having a substantially cylindrical form and comprising at least one pair of grooves **31a** envisaged in a diametrically opposed position on the outer surface of said valve guide **31,** and a forked cam **32** also having a substantially cylindrical form and in turn comprising at least one pair or rods **33,** each of which presents a free end **33b** having an oblique profile that defines an inclined plane with respect to the longitudinal coupling direction.

The grooves **31a** envisaged in the zone to the rear of said valve guide **31** are adapted to house said rods **33** of said forked cam, which extend towards the front part of the coupling from the forked cam **32,** and also a portion **31b** of the inlet edge of said grooves **31a** intended to come into contact with the free end **33b** of said rods **33** is suitably shaped with a profile that is complementary to the oblique profile of said free ends **33b** of said rods **33,** so as to make possible the relative sliding of the two inclined surfaces or slides, the end ones **33b** and the inlet one **31 b,** as will be better described below when illustrating the operation of the device. Said mechanical locking device **30** further comprises locking means of the valve guide **31** in the open position of the valve body **11.** Said locking means of the valve guide **31** comprise a compression-torsion spring **34** of the valve guide **31.** Said compression-torsion spring **34** works between said valve guide **31** and an inner body **40** which also has a substantially cylindrical hollow for that is axially mobile with respect to an outer body **50** of said female coupling. Said inner body **40** presents a suitable housing **41** for a peg or pin **35** which is therefore integral with said inner body **40.** Said peg **35** internally extending to the coupling in a radial direction and inserting itself in a sectioned groove **36** envisaged on the outer surface of said valve guide **31.**

The sectioned groove **36** presents a first portion **36a,** next to the rear portion of the said valve guide **31,** having a greater width, and a second portion **36b** that develops longitudinally towards the front portion of said valve guide **31,** the lesser width that is substantially the same as the width, or as the diameter in the case of cylindrical peg as in the example shown in the accompanying figures, of said peg **35.**

The terms "front" and "rear" in the present description relate to the female coupling in question. The end of the female coupling intended to be inserted into the male coupling is therefore understood as the front end and the coupling connected to the line as the rear end. Analogously therefore, the front portion of the valve guide is the portion next to the front end of the coupling.

La variation of the width of the portions **36a** and **36b** of the sectioned groove **36,** determines a connection zone **37** that constitutes an abutment for said peg **35,** the connection zone of which can advantageously be shaped so as to more firmly house the peg **35.** In particular, with reference to the embodiment illustrated in the accompanying drawings, said connection zone **37** may present an recess **37a** having a suitable curvature ratio for housing the circular profile of the peg **35,** so that the latter may not accidentally slip out of this recess **37a.**

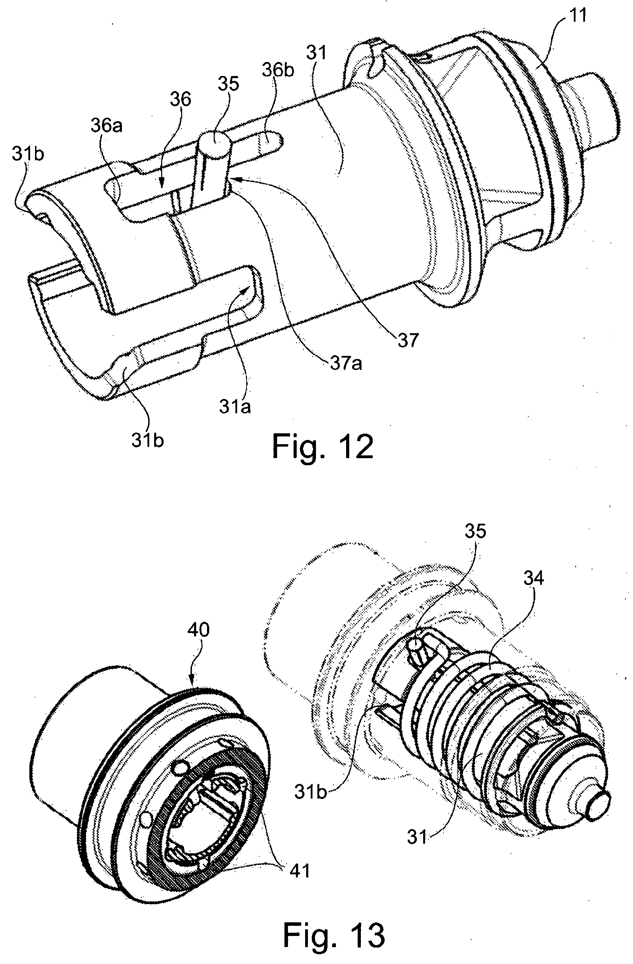

According to the above description and as can be seen in Figure 12, for example, the peg **35** moves along the sectioned groove **36** in the relative movements between said valve guide **31** and said inner body **40,** with which said peg **35** is integral.

In particular, it will be more clearly seen below in describing the operation of the coupling according to the present invention, how said valve guide **31** can move along the longitudinal direction of the coupling and can rotate about the axis thereof in relation to the inner body **40** of the female coupling. During the relative movement of the valve guide in respect of the inner body **40,** the peg **35,** which is integral to the inner body **40,** slides in relation to the valve guide **31** within the sectioned groove **36,** first travelling along the rear portion **36a** of said groove until it reaches said connection zone **37.** In order release the peg **35** from the connection zone **37,** in particular from the recess **37a** specially formed to prevent the peg from accidentally slipping out of the indentation itself, the valve guide **31** must complete a rotation about the axis thereof in relation to the inner body **40,** in the direction -indicated by the arrows in the accompanying drawings - that results in a movement of the peg **35** from the rear portion **36a** towards the portion **36b,** which extends towards the front part of the valve guide **31.**

Said locking means of the valve guide therefore prevent the valve guide from moving backward or forward by effect of the pressure of the fluid.

The operation of the mechanical locking device **30** of the female coupling according to the present invention will now be illustrated with reference to the accompanying drawings, which show the connection steps of the male coupling **20** with the female coupling **10.**

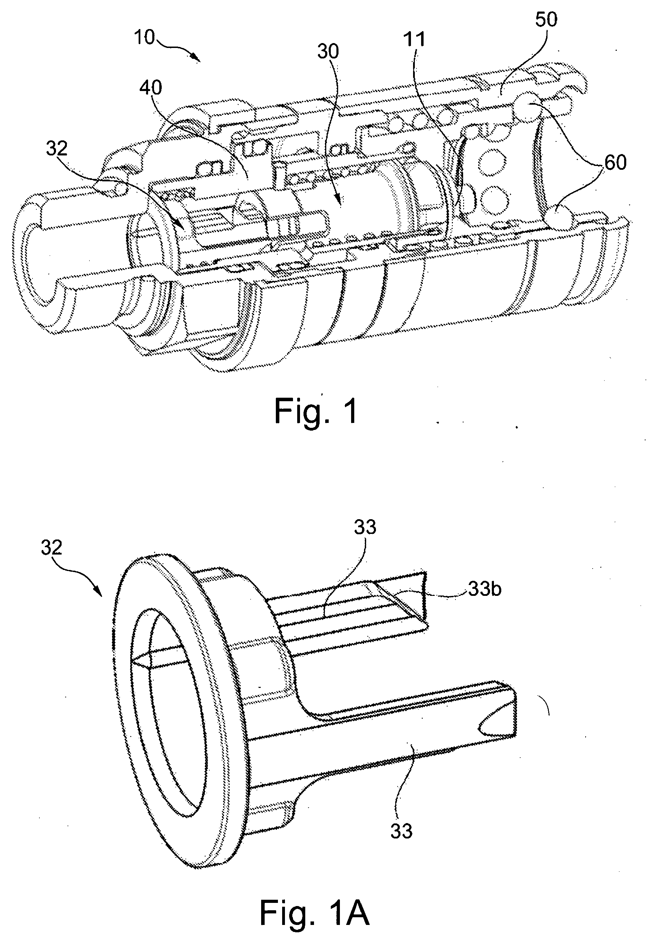

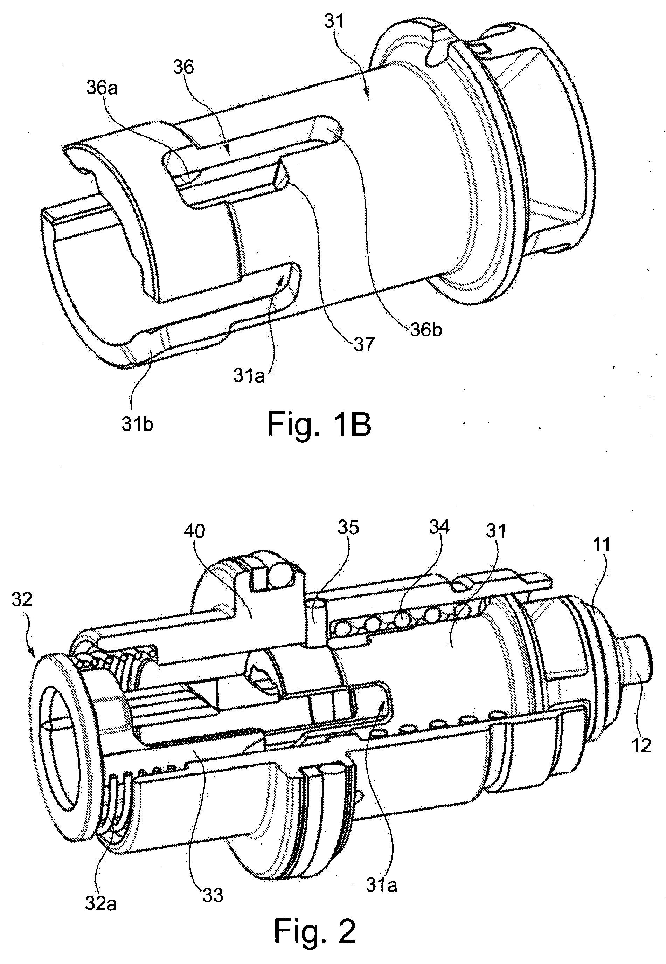

With reference to Figure 1, when the female coupling and the male coupling are uncoupled the valve body **11** of the female coupling closes the axial passage for the fluid, being maintained in a forward closed position by the helical compression-torsion spring **34** which acts between said valve guide **31** and the inner body **40,** and the mechanical locking device **30** therefore finds itself in the position visible in figure 1, wherein said valve guide **31** is in the forward valve closure position, as mentioned, the forked cam **32** is maintained in a position retracted from the action of the spring of the forked cam **32a,** which acts between said forked cam **32** and said inner body **40** opposing the approach of the forked cam **32** to said valve guide **31.**

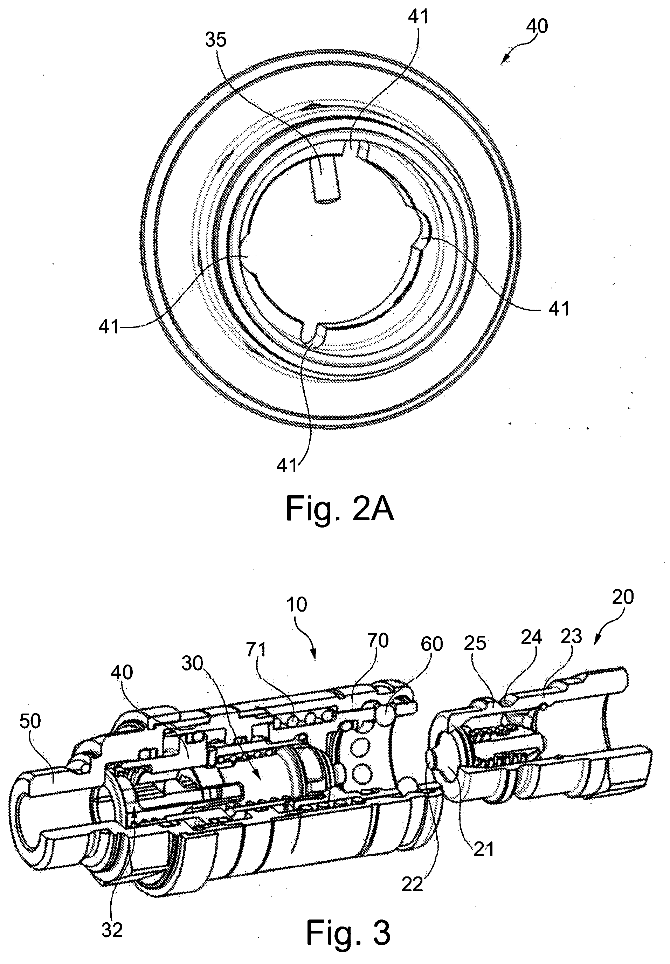

In order to guide the forked cam **32** into the translatory movement thereof in relation to the inner body **40,** the latter is provided with guide grooves **41,** that are visible for example in the details of figures **2A** and **13****.**

In this configuration of an unconnected male coupling and thus valve body **11** of the female coupling **10** in a closed position, the peg **35** is inserted in the sectioned groove **36** envisaged on the outer surface of said valve guide **31** at the level of the rear end of the first portion **36a** of said groove. Once again with reference to Figures 1 and 3, the rods **33** of the forked cam **32** are not in contact with said valve guide **31,** which can therefore move backward by effect of the thrust exercised by the valve body **21** of the male coupling **20** when the male is inserted into the female coupling.

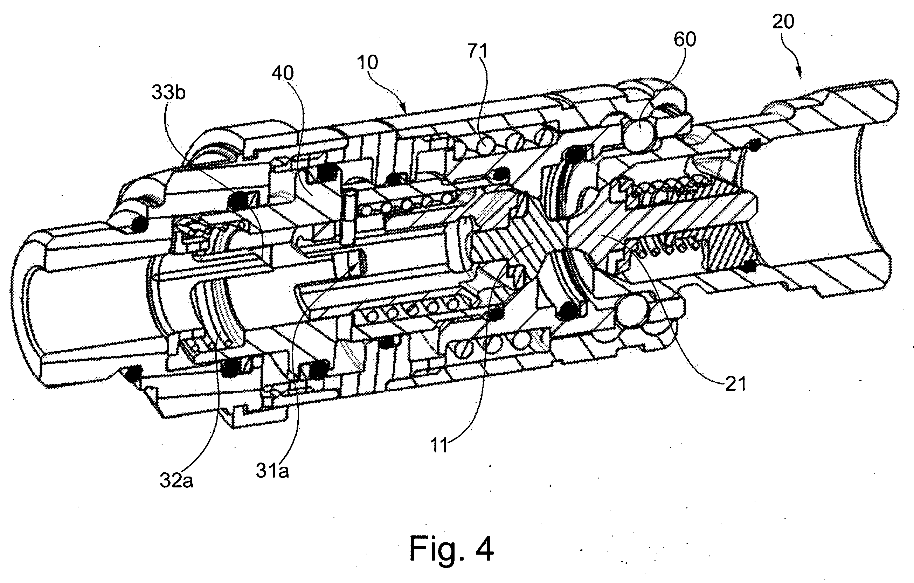

Figure 4 represents the condition in which the valve body **21** of the male coupling comes into contact with the valve body **11** of the female coupling, the latter nevertheless remaining in the forward closed position of the coupling.

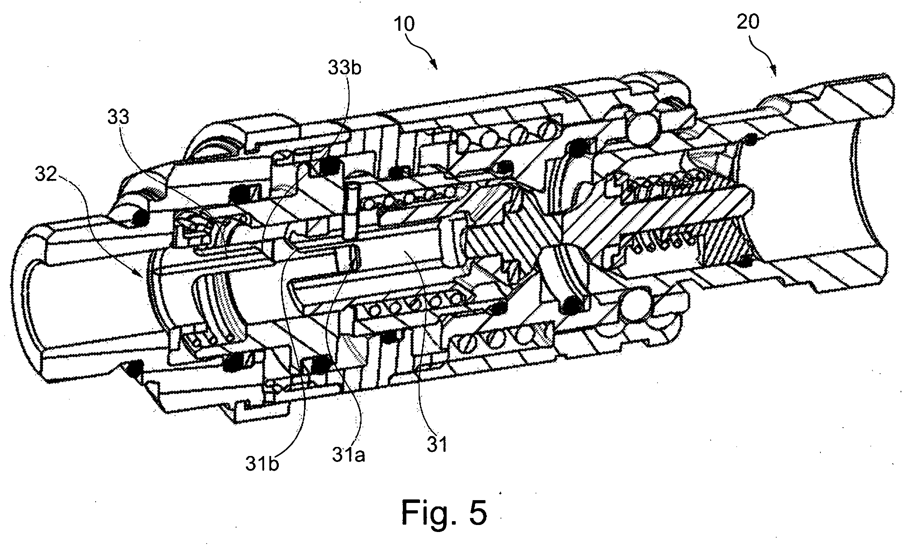

The subsequent step, shown in Figure 5, envisages that insertion of the male coupling results in the opening of the valve body of the female coupling. This is obtained in that the male coupling is subjected to internal pressure. The valve of the male is thus pushed by the hydrostatic pressure, beyond the elastic spring associated thereto, while the valve body **11** of the female coupling, and with it the valve guide **31** moves backward resulting in compression of the compression-torsion spring **34.** At the same time the outer body **23** of the male coupling tangentially rests on the locking balls **60** of the female coupling that are radially pushed outwards by the profile **25** of the outer body **23.**

Continuing with the insertion of the male coupling, the valve of the male begins to open the valve of the female coupling, according to what is still visible in Figure 5. The ball housing **70** within which the locking balls are radially mobile **60** is dragged backward, i.e. towards the rear zone of the female coupling, by the thrust action of the male and therefore moves backward both the mechanical locking device **30,** in particular the valve guide **31** with all the elements associated thereto, bringing the rear edge of said valve guide closer **31,** in particular with the portion **31 b** of the inlet edge of the grooves **31a,** to the rods **33** of the forked cam **32.**

The backward movement of the valve body **11** and of the valve guide **31** causes compression of the decompression-torsion spring **34** of the valve guide **31** and of said forked cam spring **32a** that is compressed by the backward movement of the inner body **40.**

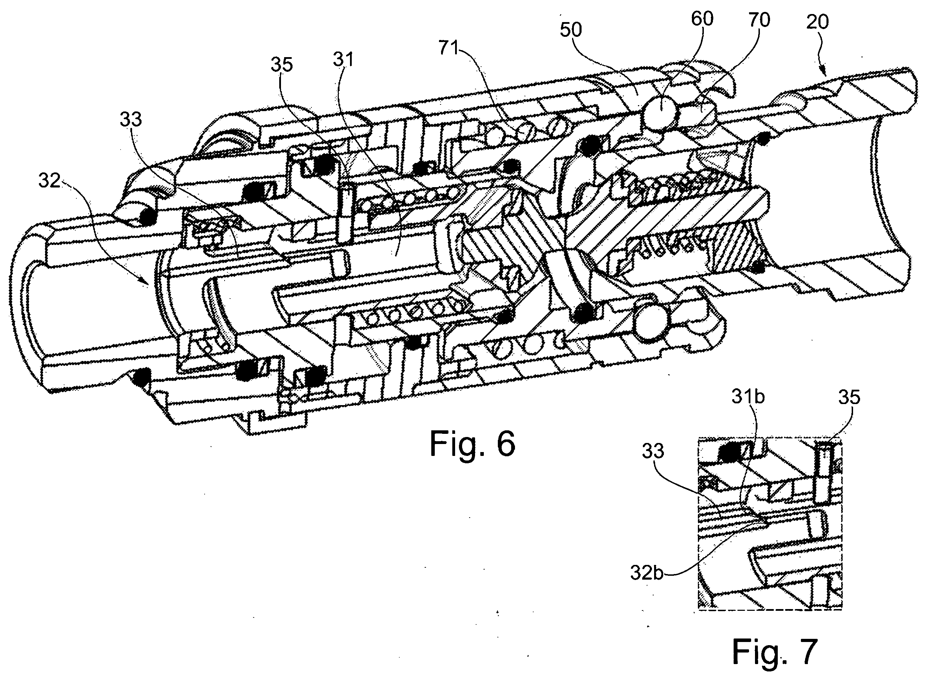

With particular reference to Figure 6 and to the detail of Figure 7, in this step the valve guide **31** moves backward towards the rear part of the coupling translating without completing any rotation about the axis thereof. In this step, the peg **35** that is longitudinally mobile integrally to the inner body **40,** guides the valve guide **31** in the longitudinal axial translation thereof sliding within the sectioned groove **36.** In particular, the valve guide **31,** in the axial movement thereof in relation to the peg **35,** the latter slides within the first portion **36a** of the sectioned groove **36** thus allowing the backward movement of the valve guide **31.**

When the rods **33** of the forked cam **32** come into contact with the portion **31 b** of the inlet edge of the grooves **31a** by effect of the backward movement of the valve guide **31,** the oblique profile, i.e. inclined in respect of the longitudinal direction, of the ends results in rotation of the valve guide **31** about the longitudinal axis thereof until said rods **33** find the grooves **31a** envisaged in the rear zone of said valve guide **31** and adapted to house said rods **33.** The peg **35** is in this way aligned with the front portion **36b** of said sectioned groove **36** thus allowing backward movement of the valve guide **31,** with said peg sliding within the front portion **36b** of the groove **36** and the rods **33** of the forked cam **32** entering the grooves **31a** of said valve guide **31.**

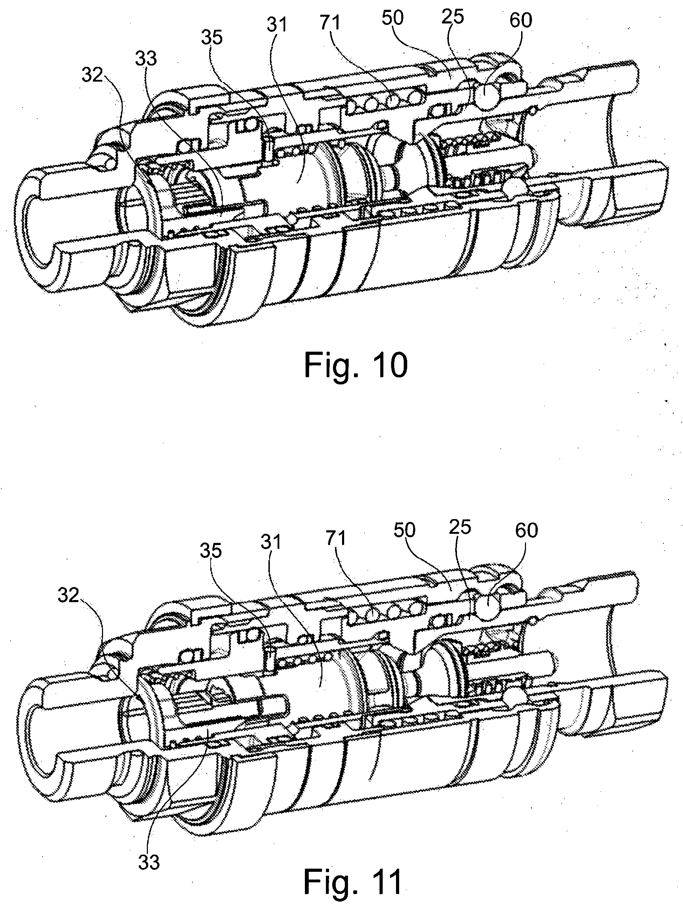

Under the thrust action of the valve body **21** of the male coupling, thus, the valve guide **31** rotates about is own axis, the peg **35** reinserts itself in the second portion **36b** and the valve guide moves further back allowing the male coupling to be inserted into the female coupling. In this step, the locking balls **60** surmount the outer profile **25** of said outer body **23** of the male coupling and fall into the circumferential seat **24.** As mentioned, the locking balls **60** are inserted into the ball housing **70** and are radially mobile between a first position in which they are housed in a special seat obtained in the inner surface of the outer body **50,** thus constraining said ball housing **70** with respect to said outer body **50,** and a second position in which the radially fall into the circumferential seat **24** of the male coupling. The situation is shown in Figures 10 and 11, thus producing a constraint between said ball housing **70** and said outer body **23** of the male coupling.

Thus at this point, the inner body **40** of the female coupling, the valve guide **31** and the ball housing **70** return to advancing towards the front portion of the female coupling under the thrust of a compression spring of the ball housing **71,** which acts between said ball housing and said outer body **50** of said female coupling. Up until this point, the male valve was still closed, pushed by the hydrostatic pressure of the fluid affecting the male coupling.

Now that insertion of the male into the female has been completed, the locking balls **60** being correctly in position to retain the male coupling, pressure can be introduced into the female coupling. The situation is shown in Figure 11. In this step the valve guide unit **31** moves the valve of the male **21** opening the passage of the flow of oil, and an equilibrium of the pressures is reached in the male and in the female. Simultaneously, the compression-torsion spring **34** pushes the valve guide forward **31** even when the ball housing **70** and the inner body **40** have reached their forward end stop position, towards the front part of the female coupling, and the relative movement between the valve guide **31** and the peg **35** ensures that the latter slides along the second portion **36b** of said sectioned guide **36** until it meets the connection zone **7** with the first portion **36a** of said sectioned guide having a greater width. By effect of the torsional thrust exercised by the compression-torsion spring **34,** the valve guide **31** rotates around the longitudinal axis thereof in an opposite direction to the direction in the above-described connection step until said peg **35** inserts itself in the recess **37a** especially envisaged at the level of the connection zone **37.** Rotation of the valve guide **31** around the longitudinal axis thereof is made possible, in addition to the fact that the peg **35** is at the level of the connection zone **37,** also by the fact that the forward movement of the valve guide **31** has resulted in the disengagement of the rods **33** of the forked cam **32** from the grooves **31a** envisaged in the rear zone of said valve guide **31.**

When the peg **35** is at the level of the connection zone **37,** the mechanical locking device **30,** comprising the valve guide **31,** the forked cam **32** with which said valve guide **31** interacts, and at least one compression-torsion spring **34** for the movement of said valve guide, maintains the valve guide and, thus, the valve body **11** in an open position. The situation, as mentioned, is the one shown in Figures 11 and 12, which shows the detail of the position of the peg **35** at the level of the connection zone **37** of the sectioned groove **36** of the valve guide **31.** When the mechanical locking device **30** is in this position, the locking function in the open position of the valve body **11** of the female coupling is also ensured in the case of return flow having an elevated flow rate.

The valve guide **31** is thus mobile between a first forward position wherein the valve body **11** produces the closure of the flow of fluid in the female coupling, a second backward position, rotated about the longitudinal axis thereof against the torsion moment exercised by said compression-torsion spring **34** that allows backward movement of the valve body **11** to allow the connection of a male coupling **20,** and a third forward position rotated around the longitudinal axis thereof by effect of the pair exercised by said compression-torsion spring **34** in a direction opposite to the first rotation and at the level of which the valve unit **11** of the female coupling and of the valve unit **21** of the male coupling open and prevent undesired backward movement of the valve unit **11** and, consequently, closures of the valve unit **21** of the male coupling **20.**

It has thus been shown how the compact female coupling, of the push-pull type, equipped with mechanical locking device according to the present invention achieves the proposed aim and objects.

In particular, it has been illustrated how the present invention allows a female coupling equipped with a locking device that is characterised by a limited number of components to be produced, and thus for extremely compact dimensions with respect to the same type of couplings that are currently on the market.

It has again been shown how the female coupling of the push-pull type equipped with a valve locking mechanism is more reliable and has more contained production costs with respect to the couplings known in the prior art, above all in terms of the greater structural simplicity of the device.

Of the advantages of the present invention, the reduced dimensions of the quick coupling allows a more versatile use by the user in that smaller spaces are required for the assembly and operation of the coupling.

Numerous changes can be made by persons skilled in the art without deviating from the scope of protection of the present invention.

The scope of protection of the claims should not thus be restricted to the illustrations or to the preferred embodiments provided by way of example in the description; the claims should instead include all the characteristics of patentable novelty arsing from the present invention, including all the characteristics that are deemed to be equivalent by a person skilled in the art.

## Claims

1. Female quick coupling (10) of the type comprising an axially mobile valve body (11) for closing the flow of fluid in the female coupling, suitable for being connected, with a connection of the push-pull type, to a corresponding male coupling (20), also equipped with an axially mobile valve body (21) for closing the flow of the fluid in the male coupling, said valve body (11) being connected to a mechanical locking device (30) of the valve body (11) adapted to prevent said valve body (11) from closing in the case of inversion of the flow, when the female coupling is connected to a male coupling, and said mechanical locking device comprises a valve guide, that is mobile in a longitudinal direction between a first forward position wherein said valve body (11) achieves the closure of the passage of the fluid in the female coupling, a second backward position that is rotated about the longitudinal axis thereof, which allows a male fitting (20) to be connected to a third forward position that is rotated about the longitudinal axis thereof in the opposite direction to the first rotation at the level of which the valve unit (11) of the female fitting and the valve unit (21) of the male fitting open and that prevents undesired backward movements of the valve unit (11), and consequently of closures of the valve unit (21) of the male fitting (20) **characterized in that** said valve guide (31) has a substantially cylindrical form and in turn comprises at least one pair of groove (31 a) envisaged in a diametrically opposed position on the outer surface of said valve guide (31), and a forked cam (32) also having a substantially cylindrical form and in turn comprising at least one pair of rods (33), said grooves (31a) on said valve guide (31) being suitable for housing said rods (33) of said forked cam, said mechanical locking device (30) further comprising at least one compression-torsion spring (34), which acts between said valve guide (31) and an inner body (40) also having a substantially hollow cylindrical form that is axially mobile with respect to an outer body (50) of said female fitting (10) and at least one sectioned groove (36) that houses a peg (35) that is integrally associated with said inner body (40) and adapted to produce the mechanical locking of said valve body (11) of the female fitting with respect to said inner body (40).

2. Female quick coupling (10) according to the preceding claim, **characterised in that** said rods (33) of said forked cam (32) present have, at the level of the free end intended to come into contact with a portion (31 b) of the inlet edge of said grooves (31 a) of said valve guide (31), an oblique profile (32b).

3. Female quick coupling (10) according to the preceding claim, **characterised in that** said sectioned groove (36) presents has a first portion (36a) next to the rear portion of said valve guide (31), having a greater width, and a second portion (36b) that develops longitudinally towards the front portion of said valve guide (31), having a lesser width that is substantially coinciding with the width of said peg (35).

4. Female quick coupling (10) according to the preceding claim, **characterised in that** said first portion (36a) of said sectioned groove (36) is connected to said second portion (36b) with a connecting zone (37) which has a recess (37a) shaped so as to firmly house said peg (35).

5. Female quick coupling (10) according to one or more of the preceding claims, **characterised in that** said inner body (40) comprises at the level of the inner surface thereof at least one longitudinal groove (41) adapted to guide said forked cam (32) in the translation movement thereof and at the same time prevent undesired movements about the longitudinal axis thereof.

6. Quick coupling **characterised in that** it comprises a female quick coupling (10) according to one or more of claims 1 to 5.

## Patentansprüche

1. Buchsenschnellkupplung (10) von dem Typ, der einen axial beweglichen Ventilkörper (11) zum Verschließen des Fluiddurchflusses in der Buchsenkupplung umfasst, welche zur Verbindung mittels einer Verbindung vom Druck-Zug-Typ mit einer entsprechenden Steckerkupplung (20) geeignet ist, die ebenfalls mit einem axial beweglichen Ventilkörper (21) zum Verschließen des Fluiddurchflusses in der Steckerkupplung ausgestattet ist, wobei der Ventilkörper (11) mit einer mechanischen Verriegelungseinrichtung (30) des Ventilkörpers (11) verbunden ist, die ausgebildet ist, um zu verhindern, dass der Ventilkörper (11) im Falle einer Strömungsumkehr schließt, wenn die Buchsenkupplung mit einer Steckerkupplung verbunden ist, und die mechanische Verriegelungseinrichtung eine Ventilführung umfasst, die in einer Längsrichtung zwischen einer ersten Vorwärtsposition, in der der Ventilkörper (11) das Schließen des Durchgangs des Fluids in der Buchsenkupplung erreicht, einer zweiten Vorwärtsposition, die um seine Längsachse gedreht ist, erreicht, was zulässt, dass ein Steckerfitting (20) in einer dritten Vorwärtsposition verbunden sein kann, die um seine Längsachse in die entgegengesetzte Richtung zu der ersten Drehung gedreht ist, auf welchem Niveau die Ventileinheit (11) des Buchsenfittings und der Ventileinheit (21) des Steckerfittings öffnen, und die unerwünschte Rückwärtsbewegungen der Ventileinheit (11) und folglich Schließungen der Ventileinheit (21) des Steckerfittings (20) verhindert, **dadurch gekennzeichnet, dass** die Ventilführung (31) eine im Wesentlichen zylindrische Form aufweist und wiederum zumindest ein Nutenpaar (31 a) umfasst, das in einer diametral entgegengesetzten Position an der Außenfläche der Ventilführung (31) vorgesehen ist, und einen gegabelten Nocken (32), der ebenfalls eine im Wesentlichen zylindrische Form aufweist und wiederum zumindest ein Paar Stäbe (33) umfasst, wobei die Nuten (31 a) an der Ventilführung (31) geeignet sind, um die Stäbe (33) des gegabelten Nockens unterzubringen, wobei die mechanische Verriegelungseinrichtung (30) ferner zumindest eine Druck-Torsionsfeder (34) umfasst, die zwischen der Ventilführung (31) und einem Innenkörper (40) wirkt, der ebenfalls eine im Wesentlichen hohlzylindrische Form aufweist und axial mit Bezug auf einen Außenkörper (50) des Buchsenfittings (10) beweglich ist und zumindest eine abschnittsweise vorgesehene Nut (36) aufweist, die einen Zapfen (35) beherbergt, der dem inneren Körper (40) einteilig zugeordnet und ausgebildet ist, um die mechanische Verriegelung des Ventilkörpers (11) des Buchsenfittings mit Bezug auf den inneren Körper (40) zu erzeugen.

2. Buchsenschnellkupplung (10) nach dem vorhergehenden Anspruch, **dadurch gekennzeichnet, dass** die Stäbe (33) des vorgesehenen gegabelten Nockens (32) auf der Höhe des freien Endes, das dafür vorgesehen ist, in Kontakt mit einem Abschnitt (31 b) der Einlasskante der Nuten (31 a) der Ventilführung (31) zu gelangen, ein schräges Profil (32b) aufweist.

3. Buchsenschnellkupplung (10) nach dem vorhergehenden Anspruch, **dadurch gekennzeichnet, dass** die abschnittsweise vorgesehene Nut (36) einen ersten Abschnitt (36a) neben dem hinteren Abschnitt der Ventilführung (31) aufweist, der eine größere Breite besitzt, und einen zweiten Abschnitt (36b), der sich in Längsrichtung zu dem vorderen Abschnitt der Ventilführung (31) hin entfaltet und eine kleine Breite aufweist, die im Wesentlichen mit der Breite des Zapfens (35) zusammenfällt.

4. Buchsenschnellkupplung (10) nach dem vorhergehenden Anspruch, **dadurch gekennzeichnet, dass** der erste Abschnitt (36a) der abschnittsweise vorgesehenen Nut (36) mit dem zweiten Abschnitt (36b) mit einer Verbindungszone (37) verbunden ist, die eine Ausnehmung (37a) aufweist, die derart geformt ist, dass sie den Zapfen (35) fest beherbergt.

5. Buchsenschnellkupplung (10) nach einem oder mehreren der vorhergehenden Ansprüche, **dadurch gekennzeichnet, dass** der innere Körper (40) auf der Höhe seiner Innenfläche zumindest eine Längsnut (41) umfasst, die ausgebildet ist, um den gegabelten Nocken (32) in seiner Verlagerungsbewegung zu führen und gleichzeitig unerwünschte Bewegungen um seine Längsachse zu verhindern.

6. Schnellkupplung, **dadurch gekennzeichnet, dass** sie eine Buchsenschnellkupplung (10) nach einem oder mehreren der Ansprüche 1 bis 5 umfasst.

## Revendications

1. Raccord rapide femelle (10) du type comprenant un corps de valve (11) axialement mobile pour arrêter le flux d'un fluide dans le raccord femelle, apte à être connecté, par une connexion du type pousser-tirer, à un raccord correspondant mâle (20), également équipé d'un corps de valve (21) axialement mobile pour arrêter le flux du fluide dans le raccord mâle, ledit corps de valve (11) étant connecté à un dispositif de verrouillage mécanique (30) du corps de valve (11) adapté pour empêcher le corps de valve (11) de fermer dans le cas d'une inversion de flux, lorsque le raccord femelle est connecté à un raccord mâle, et le dispositif de verrouillage mécanique comprend un guide de valve qui est mobile dans une direction longitudinale entre une première position avant dans laquelle le corps de valve (11) termine la fermeture du passage du fluide dans le raccord femelle, une deuxième position arrière qui est tournée autour de l'axe longitudinal de celui-ci et qui permet à un raccord mâle (20) d'être connecté dans une troisième position avant qui est tournée autour de l'axe longitudinal de celui-ci dans la direction opposée à la première rotation à un point où l'unité de valve (11) du raccord femelle et l'unité de valve (21) du raccord mâle ouvrent, et qui empêche des mouvements en arrière non désirés de l'unité de valve (11) et, par conséquent, des fermetures de l'unité de valve (21) du raccord mâle (20),
**caractérisé en ce que** le guide de valve (31) a une forme sensiblement cylindrique et, à son tour, comprend au moins une paire de rainures (31a) envisagée dans une position diamétralement opposée sur la surface extérieure dudit guide de valve (31) et une came fourchue (32) ayant également une forme sensiblement cylindrique et comprenant, à son tour, au moins une paire de tiges (33), les rainures (31a) sur le guide de valve (31) étant aptes à loger les tiges (33) de la came fourchue, le dispositif de verrouillage mécanique (30) comprenant en outre au moins un ressort à compression-torsion (34) qui agit entre ledit guide de valve (31) et un corps intérieur (40) ayant également une forme sensiblement cylindrique creuse qui est axialement mobile par rapport à un corps extérieur (50) du raccord femelle (10) et au moins une rainure sectionnée (36) qui loge un ergot (35) qui est intégralement associé au corps intérieur (40) et adapté pour produire le verrouillage mécanique du corps de valve (11) du raccord femelle par rapport au corps intérieur (40).

2. Raccord rapide femelle (10) selon la revendication précédente, **caractérisé en ce que** les tiges (33) de la came fourchue (32) ont, dans la zone de l'extrémité libre destinée à venir en contact avec une partie (31b) du bord d'entrée des rainures (31a) du guide de valve (31) un profile oblique (32b).

3. Raccord rapide femelle (10) selon la revendication précédente, **caractérisé en ce que** la rainure sectionnée (36) présente une première partie (36a) proche d'une partie arrière du guide de valve (31), ayant une largeur plus grande, et une deuxième partie (36b) qui se développe longitudinalement vers la partie avant du guide de valve (31), ayant une largeur moindre qui coïncide sensiblement avec la largeur de l'ergot (35).

4. Raccord rapide femelle (10) selon la revendication précédente, **caractérisé en ce que** la première partie (36a) de la rainure sectionnée (36) est connectée à la deuxième partie (36b) avec une zone de connexion (37) qui a un renfoncement (37a) formé de façon à loger fermement ledit ergot (35).

5. Raccord rapide femelle (10) selon une ou plusieurs des revendications précédentes, **caractérisé en ce que** le corps intérieur (40) comprend à la surface intérieure de celui-ci au moins une rainure longitudinale (41) adaptée pour guider la came fourchue (32) dans le mouvement en translation de celle-ci et pour empêcher en même temps des mouvements non désirés autour de l'axe longitudinal de celui-ci.

6. Raccord rapide **caractérisé en ce qu'**il comprend un raccord rapide femelle (10) selon une ou plusieurs des revendications 1 à 5.
